Europäisches Patentamt

European Patent Office

Office européen des brevets

(19)

(11) **EP 1 471 370 A1**

(12) # DEMANDE DE BREVET EUROPEEN

(43) Date de publication:
**27.10.2004 Bulletin 2004/44**

(51) Int Cl.⁷: $G02B\ 6/14$, $G02B\ 6/293$

(21) Numéro de dépôt: **04291003.4**

(22) Date de dépôt: **14.04.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **25.04.2003 FR 0305095**

(71) Demandeur: **ALCATEL**
**75008 Paris (FR)**

(72) Inventeurs:
- **De Barros, Carlos**
  **92100 Boulogne-Billancourt (FR)**
- **Riant, Isabelle**
  **91400 Orsay (FR)**

(74) Mandataire: **Chaffraix, Sylvain**
**Compagnie Financière Alcatel**
**Département de Propriété Industrielle,**
**5, rue Noel Pons**
**92734 Nanterre Cedex (FR)**

(54) **Dispositif et procédé de transformation de mode de propagation de signaux, par intérferences**

(57)     Un dispositif optique (D) est dédié à la transformation de mode de propagation de signaux optiques. Ce dispositif comprend des moyens de transformation de mode (3-5), associés à une fibre multimode (2), et comportant des premier (3) et second (5) convertisseurs de mode couplés l'un à l'autre par une portion de fibre multimode (4) de longueur (L) choisie. Le premier convertisseur (3) est alimenté en signaux se propageant selon un premier mode et délivre les signaux dans la portion de fibre (4), en partie selon le premier mode et en partie selon un second mode d'ordre plus élevé que le premier, et le second convertisseur (5) est agencé pour faire interférer les signaux selon les premier et second modes de sorte qu'ils présentent en sortie un espacement spectral choisi.

FIG.1

**Description**

L'invention concerne le domaine de la transmission optique, et plus particulièrement la transformation de mode de propagation dans des systèmes de transmission optique.

Comme le sait l'homme de l'art, certaines structures guide d'onde, telles que les fibres optiques, permettent de transmettre des signaux optiques placés dans un mode de propagation dit « fondamental » ou dans un mode de propagation dit « d'ordre élevé » ou supérieur.

La propagation dans un mode d'ordre supérieur peut notamment permettre d'améliorer les performances globales de la transmission optique. En effet, en agençant spécifiquement certaines structures guide d'onde, il est possible de leur conférer certaines propriétés, comme par exemple une forte dispersion négative et une surface efficace élevée, qui permettent notamment leur intégration dans des modules de compensation de dispersion chromatique. C'est notamment le cas des fibres optiques multimode ou faiblement multimode, également appelées fibres à mode d'ordre élevé (ou HOM pour « High Order Mode »).

Les conception et fabrication de ce type de fibre optique sont aujourd'hui bien maîtrisées. Hélas, les techniques de conversion de mode longitudinaux, qui sont habituellement utilisées pour générer les modes élevés qui alimentent les fibres optiques HOM, ne permettent pas de convertir 100 % de la puissance d'un mode d'ordre inférieur en un mode d'ordre élevé (ou supérieur) choisi. Parmi ces différentes techniques, on peut notamment citer les réseaux à longue période (ou LPGs pour « Long Period Gratings », décrits notamment dans l'article de S. Ramachandran et al, Electronics Letters, Vol 37, N°22, Oct 2001), et les fibres comportant un creux interne (ou « tapered hollow fibres », décrites notamment dans l'article du Kist institute, « Tapered hollow Fibre for mode conversion, CLEO'01 paper CtuAA2).

Il résulte de l'inconvénient précité que des modes d'ordres inférieurs coexistent avec des modes d'ordres élevés au sein des fibres optiques HOM. Ces différents modes peuvent alors interférer selon un mécanisme appelé « interférence multi-trajet » (ou MPI pour « Multi-Path Interference »), provoquant ainsi une réduction significative de la qualité des signaux transmis qui limite les applications potentielles de ces fibres optiques. En fait, pour que cette réduction ne soit pas réellement nuisible, il faut que le rapport entre l'énergie transmise via les modes d'ordres inférieurs indésirables et l'énergie transmise via le mode d'ordre élevé (ou supérieur), pour une longueur d'onde donnée, soit inférieur à 40 dB.

Pour atteindre un tel rapport, il est nécessaire d'interposer une fibre intermédiaire de conversion, dédiée, entre la fibre monomode (SMF) qui fournit le mode d'ordre inférieur et la fibre HOM. Or, cette fibre intermédiaire doit, d'une première part, permettre la propagation d'un mode d'ordre inférieur qui correspond exactement au mode d'ordre inférieur de la fibre optique monomode (SMF) qui l'alimente, d'une deuxième part, offrir un mode d'ordre élevé (ou supérieur) qui correspond exactement au mode d'ordre élevé de la fibre optique HOM qu'elle alimente, et d'une troisième part, soit permettre un recouvrement des modes d'ordre inférieur et d'ordre élevé dans une région de couplage d'énergie d'extension réduite, soit présenter une différence d'indices de groupe sensiblement nulle entre les modes d'ordre inférieur et d'ordre élevé. De telles caractéristiques sont particulièrement difficiles à obtenir.

Pour tenter d'améliorer la situation, il a été proposé, dans le document brevet PCT WO 99/49342, un convertisseur à mode spatial transversal. Il s'agit ici de conformer la phase et/ou l'amplitude du mode d'ordre inférieur, dans l'espace dit « en champ lointain », en plaçant une lame de phase dans le plan de Fourier d'une lentille. Mais, le mode transformé doit recouvrir parfaitement le mode d'ordre élevé de la fibre HOM tout en présentant un recouvrement sensiblement nul avec tous les autres modes, ce qui est particulièrement difficile à obtenir.

L'invention a donc pour but d'améliorer la situation.

Elle propose à cet effet un dispositif optique de transformation de mode de propagation de signaux optiques, comprenant des moyens de transformation de mode associés à une fibre multimode ou faiblement multimode (ou fibre HOM).

Ce dispositif de transformation se caractérise par le fait que ses moyens de transformation de mode comprennent de premier et second convertisseurs de mode couplés l'un à l'autre par une portion de fibre HOM de longueur choisie, le premier convertisseur étant alimenté en signaux qui se propagent selon un premier mode (par exemple le mode fondamental (LP01)) et délivrant les signaux dans la portion de fibre HOM, en partie selon le premier mode et en partie selon un second mode d'ordre plus élevé que le premier (par exemple le mode LP02), et le second convertisseur étant chargé de faire interférer les signaux se propageant selon les premier et second modes de sorte qu'ils présentent en sortie un espacement spectral choisi.

Les moyens de transformation agissent ainsi comme un interféromètre de type Mach-Zenhder qui contraint les premier et second modes à suivre des chemins optiques différents, de manière à compenser leurs vitesses de groupe différentes, avant de les recombiner en amplitude et en phase.

Avantageusement, la longueur de la portion de fibre HOM (ou à mode d'ordre élevé ou supérieur) est choisie en fonction des premier et second modes et de l'espacement spectral choisi.

Préférentiellement, le premier convertisseur est un convertisseur de mode de type 3dB, capable de convertir environ 50% de la puissance des signaux qui l'alimentent et se propagent selon le premier mode, en signaux se propageant selon le second mode. De même, le second convertisseur est préférentiellement un convertisseur de mode de type 3dB.

Dans un mode de réalisation particulièrement avantageux, le dispositif selon l'invention est réalisé sous la forme d'une fibre HOM dans laquelle sont définis les moyens de transformation de mode et la portion de fibre de longueur choisie.

Par exemple, le premier et/ou le second convertisseurs peuvent être réalisés sous la forme d'un réseau à longue période (LPG), d'un guide d'onde non adiabatique à décroissance et/ou croissance progressive, d'un coupleur multimode, ou tout autre dispositif permettant de convertir de l'énergie d'un mode sur un autre mode.

Un tel dispositif peut par exemple constituer un élément de compensation de dispersion chromatique (ou DCF pour « Chromatic Dispersion Compensating Fibre »).

L'invention porte en outre sur un procédé de transformation de mode de propagation de signaux optiques, consistant à alimenter un premier convertisseur de mode en signaux se propageant selon un premier mode, de manière à délivrer les signaux dans une portion de fibre HOM de longueur choisie, en partie selon le premier mode et en partie selon un second mode d'ordre plus élevé que le premier, puis à laisser les signaux selon les premier et second modes se propager dans la portion de fibre HOM, et à faire interférer ces signaux à l'aide d'un second convertisseur, couplé à la portion de fibre, de sorte qu'ils présentent en sortie un espacement spectral choisi.

Une telle invention est particulièrement bien adaptée, bien que de façon non limitative, à l'entrelacement ou au multiplexage de modes, au filtrage de modes et au changement de mode en ligne.

D'autres caractéristiques et avantages de l'invention apparaîtront à l'examen de la description détaillée ci-après, et des dessins annexés, sur lesquels :

- la figure 1 illustre de façon schématique un exemple de réalisation d'un dispositif de transformation selon l'invention,
- la figure 2 illustre de façon schématique l'action de la portion de fibre HOM et des deux convertisseurs de mode sur un mode fondamental et sur un mode d'ordre élevé (ou supérieur), et
- la figure 3 est un diagramme illustrant de façon schématique l'indice de réfraction (IR), d'un exemple de fibre optique de type HOM, en fonction de son rayon (R).

Les dessins annexés pourront non seulement servir à compléter l'invention, mais aussi contribuer à sa définition, le cas échéant.

L'invention a pour objet de permettre la transformation de mode de propagation dans des systèmes de transmission optique. Dans ce qui suit, on considèrera que le dispositif selon l'invention est un module de compensation de dispersion chromatique (ou DCF pour « Chromatic Dispersion Compensating Fibre ») implanté sur une ligne de transmission à fibres optiques.

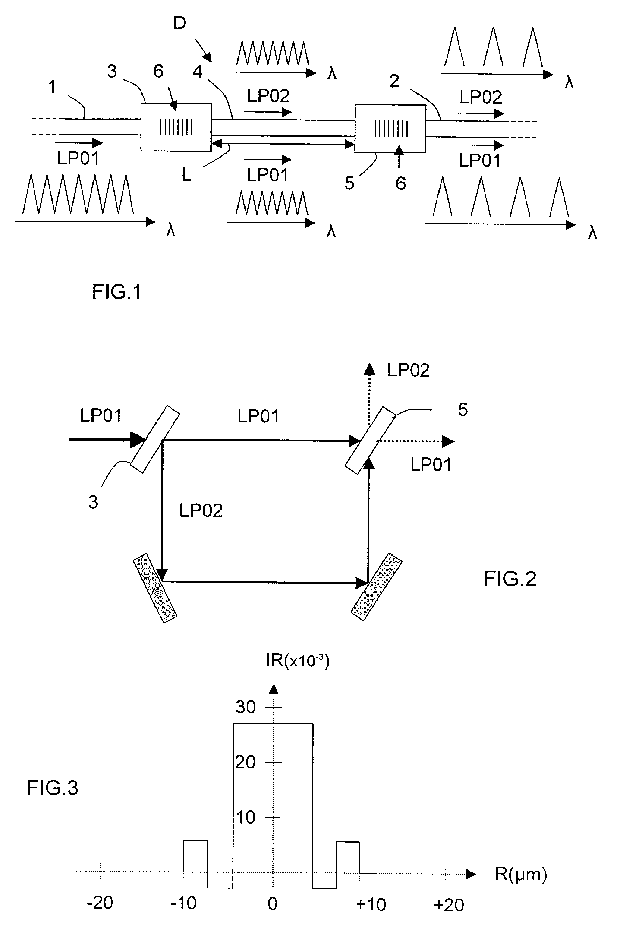

La ligne de transmission illustrée sur la figure 1 comprend une fibre optique amont 1 raccordée à une fibre optique aval 2 par l'intermédiaire d'un dispositif de transmission selon l'invention D.

La fibre optique amont 1 est par exemple une fibre optique monomode (ou SMF) dans laquelle se propagent des signaux placés dans un mode fondamental LP01 et présentant une puissance P, tandis que la fibre optique aval 2 est par exemple une fibre optique multimode ou faiblement multimode (ou encore fibre HOM) dans laquelle se propagent au moins des signaux selon un mode d'ordre élevé (ou supérieur) LP0m (par exemple m=2), issus de la conversion des signaux de mode LP01 effectuée par le dispositif D.

Selon l'invention, le dispositif de transformation D comporte un premier convertisseur de mode 3, préférentiellement de type 3dB, chargé de convertir environ 50% (soit P/2) de la puissance P des signaux de mode LP01, délivrés par la fibre optique amont 1, en signaux se propageant selon le mode LP02 choisi, et de laisser passer les 50% restant (soit P/2) de la puissance initiale P des signaux de mode LP01.

Ce premier convertisseur 3 alimente l'entrée d'une portion de fibre optique 4 multimode ou faiblement multimode (ou encore fibre HOM), de longueur L choisie, en signaux de mode LP01 et de puissance P/2 et en signaux de mode LP02 et de puissance P/2.

Les signaux de mode LP01 et les signaux de mode LP02 se propagent dans la portion de fibre HOM 4 jusqu'à sa sortie qui est couplée à un second convertisseur 5 que comprend également le dispositif de transformation D. Ce second convertisseur 5 est préférentiellement de type 3dB. Il est chargé de coupler (ou recombiner) les signaux de mode LP01 et les signaux de mode LP02, délivrés par la portion de fibre HOM 4, de sorte qu'ils interfèrent les uns sur les autres.

Le premier convertisseur 3, la portion de fibre HOM 4 et le second convertisseur 5 constituent ensemble des moyens de transformation qui se comportent, comme illustré sur la figure 2, comme un interféromètre de type Mach-Zenhder. Plus précisément, les modes LP01 et LP02 présentent des vitesses de groupe différentes en sortie du premier convertisseur 3, ils doivent donc suivre des chemins optiques différents dans la portion de fibre HOM 4 afin de pouvoir être recombinés en amplitude et en phase au niveau du second convertisseur 5. Le mode LP01 présentant la vitesse de groupe la plus faible, il parcourt ici le trajet optique le plus court.

En sortie du second convertisseur 5, on obtient ainsi une distribution sensiblement sinusoïdale de la puissance initiale P en fonction de la longueur d'onde des signaux optiques. Plus précisément, les puissances respectives ($P_{LP01}(\lambda)$ et $P_{LP02}(\lambda)$) des signaux de mode LP01 et des signaux de mode LP02 sont données par les relations suivantes :

$$P_{LP01}(\lambda) = P * \cos^2\left(\Delta\beta * \frac{L}{2}\right)$$

$$P_{LP02}(\lambda) = P * \sin\left(\Delta\beta * \frac{L}{2}\right)$$

où

$$\Delta\beta = \frac{2\pi}{\lambda}(n_{eff}^{coeur} - n_{eff}^{m}) - 2\pi * \frac{d}{d\lambda}(n_{eff}^{coeur} - n_{eff}^{m}) \, n_{eff}^{coeur}$$

est l'indice effectif du mode d'ordre inférieur se propageant dans la portion de fibre HOM 4 et $n_{eff}^{m}$ (ici m=2) est l'indice effectif pour le mode m dans la portion de fibre HOM 4.

La longueur L de la portion de fibre HOM 4 est donc choisie en fonction des vitesses de groupe des modes LP01 et LP02 et de l'espacement spectral $\Delta\lambda$ désiré entre les modes LP01 et LP02, lequel correspond à la périodicité de la conversion de mode, elle-même caractérisée par la distance interfranges EF du diagramme d'interférence en sortie du second convertisseur 5.

Cette distance interfranges EF est définie par la relation suivante :

$$EF \approx \left[ \frac{\lambda^2}{L * \left[ (n_{eff}^{coeur} - n_{eff}^{m}) - \lambda * \frac{d}{d\lambda}(n_{eff}^{coeur} - n_{eff}^{m}) \right]} \right]$$

Comme indiqué précédemment, on choisit préférentiellement des premier 3 et second 5 convertisseurs de type 3 dB car cela permet d'observer 100% des franges du diagramme d'interférence.

Par exemple, pour obtenir un espacement spectral $\Delta\lambda$ de l'ordre de 50 GHz avec une différence d'indices effectifs ($n_{eff}^{coeur} - n_{eff}^{m}$) de l'ordre de 0,02, la longueur L de la portion de fibre HOM 4 doit être égale à environ 30 cm.

La conversion de mode de type 3 dB peut être obtenue par tout moyen connu de l'homme de l'art. Par exemple, comme illustré schématiquement sur la figure 2, on peut utiliser des réseaux à longue période 6 (ou LPGs pour « Long Period Gratings »), du type de ceux décrits dans l'article de S. Ramachandran et al, Electronics Leters, Vol 37, N°22, Oct 2001). Mais, on pourrait également utiliser des « tapered hollow fibres » du type de celles décrites dans l'article précité du Kist institute, « Tapered hollow Fibre for mode conversion, CLEO'01 paper CtuAA2).

Ces types de convertisseur 3dB sont particulièrement avantageux du fait qu'ils peuvent être directement réalisés dans une fibre optique multimode ou faiblement multimode (ou encore fibre HOM).

Dans le cas d'un réseau à longue période (LPG) le couplage est rendu possible par la modification périodique de l'indice de réfraction, provoquée par une irradiation UV. Celle-ci permet en effet de coupler en copropagation le mode désiré. La période de cette variation d'indice fixe alors la longueur d'onde pour laquelle le couplage entre les deux modes a lieu (dans le cas des LPGs dans les fibres de type HOM la période est de l'ordre de 80 microns).

En utilisant ces types de convertisseur on peut implanter directement un dispositif de transformation de mode D, selon l'invention, dans une fibre de type HOM. Ainsi, il ne reste plus qu'à coupler une extrémité de fibre monomode (SMF) 1, d'une ligne de transmission, à l'extrémité de la fibre HOM, équipée de son dispositif D, pour mettre en oeuvre une fonction de transformation de mode choisie.

Parmi les fonctions de transformation que peut mettre en oeuvre un dispositif selon l'invention D, on peut notamment citer l'entrelacement de modes ou le multiplexage de modes (au moins deux modes peuvent être multiplexés afin de porter deux canaux adjacents), ou le filtrage de modes, ou encore le changement de mode en ligne (plusieurs dispositifs peuvent être placés en série dans une ligne de transmission afin de permettre la propagation alternée d'un canal choisi par les modes d'ordre inférieur (LP01, par exemple) et d'ordre élevé (LP02, par exemple)).

L'invention est particulièrement bien adaptée, bien que de façon non exclusive, aux transmissions sur de courtes distances.

A titre d'exemple illustratif, en utilisant des premier 3 et second 5 convertisseurs agencés sous la forme de réseaux à longue période 6 présentant, d'une première part, une période de 88 microns, d'une deuxième part, une longueur de 2,2 mm, d'une troisième part, une modulation d'indice de $1,2\times10^{-3}$, et d'une quatrième part, un contraste de 3 dB, on peut obtenir, pour une longueur L de portion de fibre HOM 4 (dont le profil d'indice de réfraction est du type de celui illustré, à titre d'exemple non limitatif, sur la figure 3) d'environ 30 cm, d'une part, un espacement spectral $\Delta\lambda$ d'environ 0,4 nm, et d'autre part, une réjection de mode de l'ordre de 30 dB sur une largeur de bande d'environ 30 nm.

L'invention offre également un procédé de transformation de mode de propagation de signaux optiques.

Celui-ci peut être notamment mis en oeuvre à l'aide du dispositif de transformation D présenté ci-avant. Les fonctions et sous-fonctions principales et optionnelles assurées par les étapes de ce procédé étant sensiblement identiques à celles assurées par les différents moyens constituant le dispositif de transformation D, seules seront résumées ci-après les étapes mettant en oeuvre les fonctions principales du procédé selon l'invention.

Ce procédé consiste à alimenter un premier convertisseur de mode 3 en signaux se propageant selon un premier mode, de manière à délivrer les signaux dans une portion de fibre 4 multimode ou faiblement multimode (ou encore fibre HOM) de longueur L choisie, en partie selon le premier mode et en partie selon un second mode d'ordre plus élevé que le premier, puis à laisser les signaux selon les premier et second modes se propager dans la portion de fibre HOM 4, et à faire interférer ces signaux à l'aide d'un second convertisseur 5, couplé à la portion de fibre 4, de sorte qu'ils présentent en sortie un espacement spectral $\Delta\lambda$ choisi.

L'invention ne se limite pas aux modes de réalisation de dispositif de transformation et de procédé de transformation décrits ci-avant, seulement à titre d'exemple, mais elle englobe toutes les variantes que pourra envisager l'homme de l'art dans le cadre des revendications ci-après.

**Revendications**

1. Dispositif optique (D) de transformation de mode de propagation de signaux optiques, comprenant des moyens de transformation de mode (3-5) associés à une fibre multimode (2), **caractérisé en ce que** lesdits moyens de transformation de mode (3-5) comprennent de premier (3) et second (5) convertisseurs de mode couplés l'un à l'autre par une portion de fibre multimode (4) de longueur (L) choisie, ledit premier convertisseur (3) étant alimenté en signaux se propageant selon un premier mode et délivrant lesdits signaux dans ladite portion de fibre (4), en partie selon ledit premier mode et en partie selon un second mode d'ordre plus élevé que le premier, et ledit second convertisseur (5) étant agencé pour faire interférer les signaux selon lesdits premier et second modes de sorte qu'ils présentent en sortie un espacement spectral ($\Delta\lambda$) choisi.

2. Dispositif selon la revendication 1, **caractérisé en ce que** la longueur (L) de ladite portion de fibre multimode (4) est choisie en fonction desdits premier et second modes et dudit espacement spectral ($\Delta\lambda$ )choisi.

3. Dispositif selon l'une des revendications 1 et 2, **caractérisé en ce que** ledit premier mode est le mode fondamental de propagation.

4. Dispositif selon l'une des revendications 1 à 3, **caractérisé en ce que** ledit premier convertisseur (3) est un convertisseur de mode de type 3dB, agencé de manière à convertir environ 50% de la puissance des signaux qui l'alimentent et se propagent selon le premier mode, en signaux se propageant selon le second mode.

5. Dispositif selon l'une des revendications 1 à 4, **caractérisé en ce que** ledit second convertisseur (5) est un convertisseur de mode de type 3dB.

6. Dispositif selon l'une des revendications 1 à 5, **caractérisé en ce qu'**il est réalisé sous la forme d'une fibre multimode dans laquelle sont réalisés lesdits premier (3) et second (5) convertisseurs de mode et ladite portion de fibre (4) de longueur (L) choisie.

7. Dispositif selon l'une des revendications 1 à 6, **caractérisé en ce que** lesdits premier (3) et second (5) convertisseurs de mode sont choisis dans un groupe comprenant les réseaux à longue période, les guides d'onde non adiabatiques à décroissance et/ou croissance progressive et les coupleurs multimode.

8. Dispositif selon l'une des revendications 1 à 7, **caractérisé en ce qu'**il constitue un élément de compensation de dispersion chromatique.

9. Procédé de transformation de mode de propagation de signaux optiques, **caractérisé en ce qu'**il consiste à alimenter un premier convertisseur de mode (3) en signaux se propageant selon un premier mode de manière à délivrer lesdits signaux dans une portion de fibre multimode (4) de longueur (L) choisie, en partie selon ledit premier mode et en partie selon un second mode d'ordre plus élevé que le premier, puis à laisser les signaux selon lesdits premier et second modes se propager dans ladite portion de fibre (4), et à faire interférer ces signaux à l'aide d'un second convertisseur (5), couplé à ladite portion de fibre (4), de sorte qu'ils présentent en sortie un espacement spectral choisi.

10. Utilisation du dispositif (D) et du procédé selon l'une des revendications précédentes dans un domaine choisi dans un groupe comprenant l'entrelacement ou le multiplexage de modes, le filtrage de modes et le changement de mode en ligne.

FIG.1

FIG.2

FIG.3

**RAPPORT DE RECHERCHE EUROPEENNE**

Numéro de la demande

EP 04 29 1003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 269 205 B1 (PERAL EVA ET AL) 31 juillet 2001 (2001-07-31) * figures 1-3,6,7 * * colonne 5, ligne 66 - colonne 6, ligne 44 * * colonne 7, ligne 40 - colonne 8, ligne 67 * ----- | 1,3,6-10 | G02B6/14 G02B6/293 |
| A | EP 0 272 911 A (CORNING GLASS WORKS) 29 juin 1988 (1988-06-29) * figure 1 * * colonne 3, ligne 12 - colonne 4, ligne 5 * ----- | 1,4-6,9, 10 | |
| A | US 6 418 256 B1 (ROSENBLIT MICHAEL ET AL) 9 juillet 2002 (2002-07-09) * colonne 9, ligne 47 - colonne 10, ligne 31 * * colonne 11, ligne 42 - colonne 12, ligne 11 * * figures 13,15 * ----- | 1,3,8-10 | |
| A | US 6 377 726 B1 (BRAUDE OFER ET AL) 23 avril 2002 (2002-04-23) * colonne 3, ligne 46 - colonne 4, ligne 26 * * figures 1,2 * ----- | 1,3,8-10 | DOMAINES TECHNIQUES RECHERCHES (Int.Cl.7) G02B H04B |
| A,D | US 2002/012498 A1 (DANZIGER YOCHAY) 31 janvier 2002 (2002-01-31) * page 3, alinéa 43 - alinéa 47 * ----- | 1,8-10 | |

Le présent rapport a été établi pour toutes les revendications

| Lieu de la recherche | Date d'achèvement de la recherche | Examinateur |
|---|---|---|
| La Haye | 30 juillet 2004 | Mathyssek, K |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**     EP 04 29 1003

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-07-2004

| Document brevet cité au rapport de recherche | | Date de publication | Membre(s) de la famille de brevet(s) | | Date de publication |
|---|---|---|---|---|---|
| US 6269205 | B1 | 31-07-2001 | AU | 4334599 A | 20-12-1999 |
| | | | EP | 1108235 A1 | 20-06-2001 |
| | | | WO | 9963375 A1 | 09-12-1999 |
| EP 0272911 | A | 29-06-1988 | US | 4804248 A | 14-02-1989 |
| | | | AU | 598888 B2 | 05-07-1990 |
| | | | AU | 8262387 A | 23-06-1988 |
| | | | CA | 1303395 C | 16-06-1992 |
| | | | EP | 0272911 A2 | 29-06-1988 |
| | | | JP | 63180234 A | 25-07-1988 |
| US 6418256 | B1 | 09-07-2002 | AU | 3240100 A | 14-09-2000 |
| | | | WO | 0051268 A1 | 31-08-2000 |
| | | | WO | 0051269 A1 | 31-08-2000 |
| | | | AU | 3860200 A | 14-09-2000 |
| | | | US | 6360045 B1 | 19-03-2002 |
| US 6377726 | B1 | 23-04-2002 | AUCUN | | |
| US 2002012498 | A1 | 31-01-2002 | AU | 3114499 A | 18-10-1999 |
| | | | CA | 2325883 A1 | 30-09-1999 |
| | | | EP | 1064574 A1 | 03-01-2001 |
| | | | JP | 2002507778 T | 12-03-2002 |
| | | | WO | 9949342 A1 | 30-09-1999 |
| | | | AU | 3114699 A | 18-10-1999 |
| | | | AU | 3635799 A | 18-10-1999 |
| | | | CA | 2325881 A1 | 30-09-1999 |
| | | | CA | 2325985 A1 | 30-09-1999 |
| | | | EP | 1064572 A2 | 03-01-2001 |
| | | | EP | 1066539 A1 | 10-01-2001 |
| | | | JP | 2002507874 T | 12-03-2002 |
| | | | WO | 9949341 A1 | 30-09-1999 |
| | | | WO | 9949340 A2 | 30-09-1999 |
| | | | US | 6404952 B1 | 11-06-2002 |
| | | | US | 2002001430 A1 | 03-01-2002 |

EPO FORM P0480

Pour tout renseignement concernant cette annexe : voir Journal Officiel de l'Office européen des brevets, No. 12/82